# EUROPEAN PATENT SPECIFICATION

(11) **EP 3 160 803 B1**
(45) Date of publication and mention of the grant of the patent: **18.04.2018**
(21) Application number: 15732603.4
(22) Date of filing: 23.06.2015
(51) Int. Cl.: B60T 1/06, F16D 55/24, F16D 55/40, B60K 17/04, F16H 48/06

(54) **SUPPORTING ASSEMBLY OF A WHEEL WITH EPICYCLIC REDUCTION GEAR SYSTEM AND INTEGRATED PARKING BRAKE WITH SIMPLIFIED ASSEMBLY**
RADAUFHÄNGUNG MIT PLANETENUNTERSETZUNGSGETRIEBE UND FESTSTELLBREMSE MIT VEREINFACHTEM AUFBAU
SUPPORT D'UN ROUE AVEC BOÎTE DE REDUCTION PLANÉTAIRE ET FREIN DE STATIONNEMENT SIMPLIFIÉE

(30) Priority: 25.06.2014 IT MO20140186
(43) Date of publication of application: 03.05.2017
(73) Proprietor: Comer Industries S.p.A., 20145 Milano (IT)
(72) Inventor: BRUNAZZI, Achille, I-42044 Gualtieri Frazione Santa Vittoria (IT); PROSPERO, Roberto, I-37129 Verona (IT); FONTANA, Paolo, I-42027 Montecchio Emilia (IT)
(74) Representative: Modiano, Micaela Nadia
(86) International application number: PCT/EP2015/064143
(87) International publication number: WO 2015/197637

(56) References cited:
- WO-A1-88/02450
- WO-A1-99/41118
- GB-A- 2 073 115
- US-A- 4 010 830
- US-A- 4 142 615

## Description

The present invention relates to a supporting assembly of a wheel with an epicyclic reduction gear system and integrated parking brake, with simplified assembly, particularly for wheeled excavators.

In vehicles where the wheel-hubs have an epicyclic reduction gear system, the braking action is usually exerted on the sun gear which, through the epicyclic reduction gear unit, which is composed of planet gears and a ring gear, brakes the planet gear carrier and thus the wheel-hub which is integral therewith and to which the wheel is fixed.

Such devices for locking wheels, or for braking, are however not devoid of drawbacks, among which is the fact that the wheel, when the locking device is actuated, is still affected by the meshing plays of the epicyclic reduction gear unit, and thus is not perfectly locked. In particular, when the vehicle is forced to move forward and backward, as in the case of wheeled excavators in which the action of the bucket pushes and pulls the vehicle, the above mentioned meshing plays of the epicyclic reduction gear unit generate a bothersome and hazardous oscillation of the vehicle, usually referred to as "clattering".

In order to overcome such drawback, the use is made of locking devices that, by acting directly between the wheel and a fixed element of the steering axle, bypass the epicyclic reduction gear unit and eliminate the aforementioned "clattering" of the vehicle.

From WO 99/41118, for example, a solution is known of an epicyclic wheel hub with integrated service brake in which the pack of brake discs is interposed between the planet gear carrier and an internal disc-holder sleeve connected to the frame of the transmission, and therefore the sliding tracks which define the prismatic coupling with the external brake discs are provided directly on the planet gear carrier.

In the assembly step, after having connected the internal disc-holder sleeve to the frame of the transmission, the operator has to position the pack of brake discs and, then, the ring gear. Lastly, the operator has to mount the planet gear carrier, with the planet gears already pre-mounted in the corresponding seats. During insertion of the planet gear carrier, the operator has to simultaneously mesh the planet gears with the ring gear and with the sun gear, and the external brake discs in the corresponding tracks which are provided on the planet gear carrier.

Therefore, the operator first has to succeed in placing all the external brake discs in angular phase with each other in order to enable their insertion in the corresponding sliding tracks while the planet gear carrier is made to approach in an axial direction.

This conventional solution is not devoid of drawbacks among which is the fact that the mounting step is rather laborious and has to be carried out with the maximum accuracy by the operators, thus involving a lengthening of the cycle times.

In fact in the event of impacts or excessive forcing, the toothing of some components may be damaged, creating production discards.

Furthermore, since the outer diameter of the planet gear carrier hub has to be geared down, it has a smaller diameter in the region for accommodating the ring gear, and so the dimensioning of the entire reduction gear unit is conditioned, penalizing its effectiveness.

Also, the machining of the inner surface of the planet gear carrier hub in order to obtain the sliding tracks for the brake discs must be carried out by way of slotting. For this reason, the manufactures also have to have slotting tools and as a consequence they need to have digitally controlled machines, in addition to carrying out the broaching process with which the inner toothing of the ring gear is usually machined.

The aim of the present invention is to eliminate the above mentioned drawbacks in the background art by providing a supporting assembly of a wheel with an epicyclic reduction gear system and integrated service brake with simplified assembly, which makes it possible to facilitate and speed up the assembly of the various component parts, so as to reduce the production times and costs and avoid the formation of discards.

Within this aim, another object of the present invention is to provide a simple structure which is easy and practical to implement, safe in use and effective in operation, and low cost.

This aim and these and other objects are achieved by the present supporting assembly of a wheel with an epicyclic reduction gear system and integrated service brake with simplified assembly, which comprises an epicyclic reduction gear unit with at least one reduction stage provided with a driving sun gear associated with a fixed ring gear by interposition of at least one planet gear which is supported by a driven planet gear carrier and is substantially cup-shaped, so as to define a bottom wall associated with at least one supporting pivot of said at least one planet gear and a cylindrical side wall which can be coupled to the hub of a wheel, the ring gear being supported in a fixed manner within the planet gear carrier, and a braking assembly provided with a plurality of brake discs which are integral in rotation with said planet gear carrier and a plurality of fixed complementary brake discs interposed between said discs, characterized in that it comprises a separate external disc holder which supports said discs, is accommodated within said planet gear carrier and is rotationally integral therewith.

Further characteristics and advantages of the present invention will become better apparent from the detailed description of a preferred, but not exclusive, embodiment of a supporting assembly of a wheel with an epicyclic reduction gear system and integrated service brake with simplified assembly, which is illustrated for the purposes of non-limiting example in the accompanying drawings wherein:

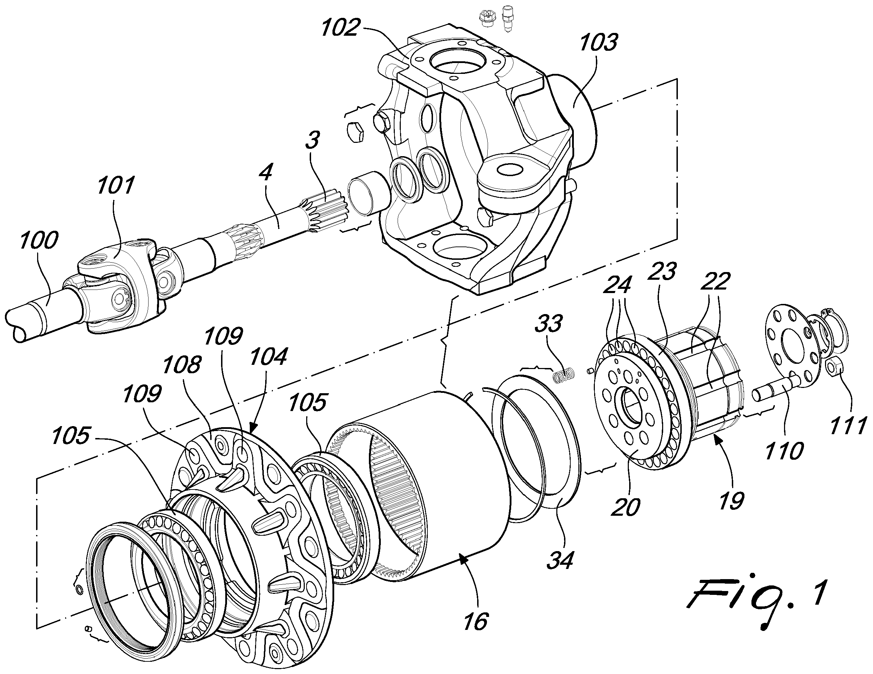

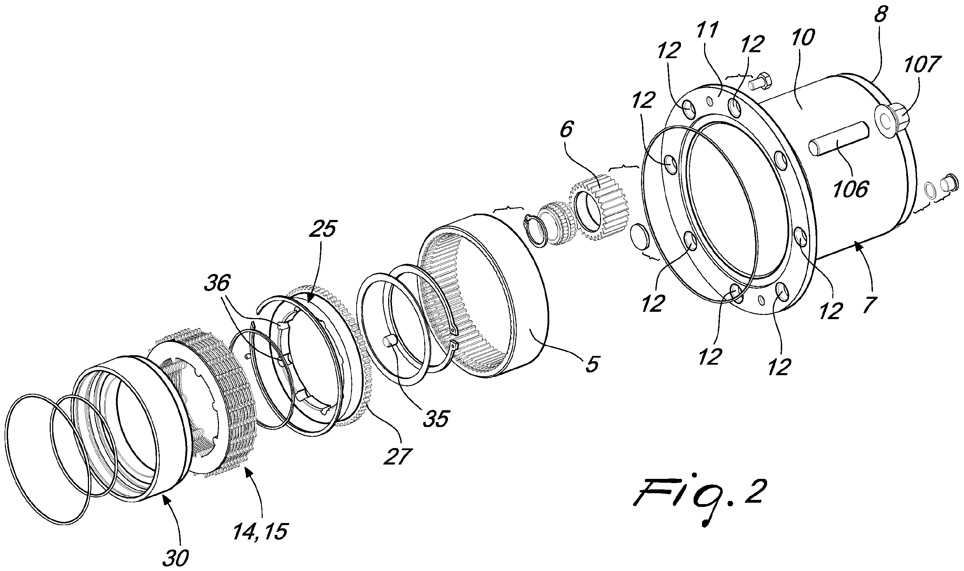

Figures 1 and 2 are partial, schematic exploded views of a supporting assembly of a wheel with an epicyclic reduction gear system and integrated service brake with simplified assembly, according to the invention;

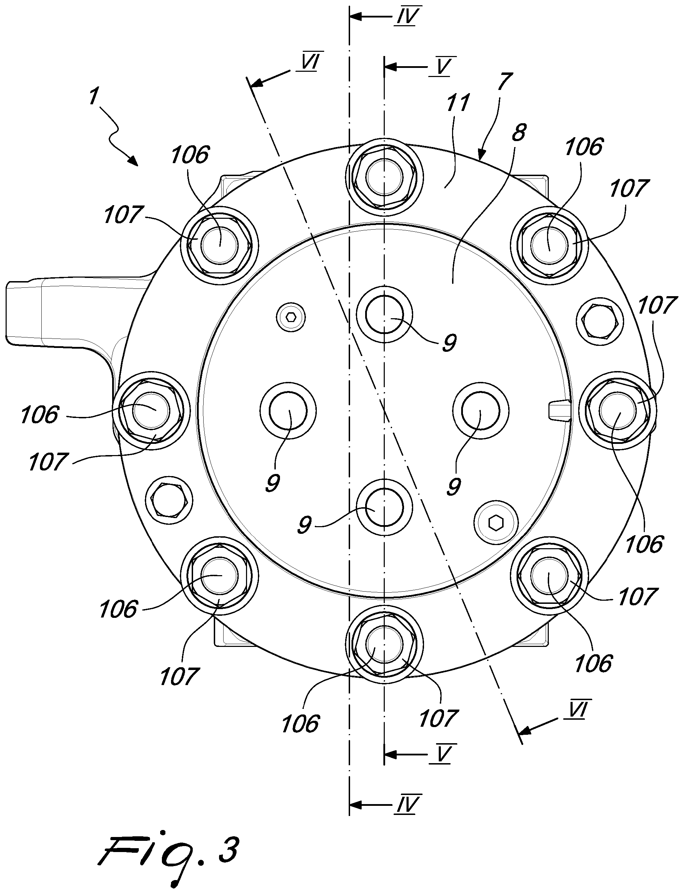

Figure 3 is a schematic front elevation view of the supporting assembly according to the invention;

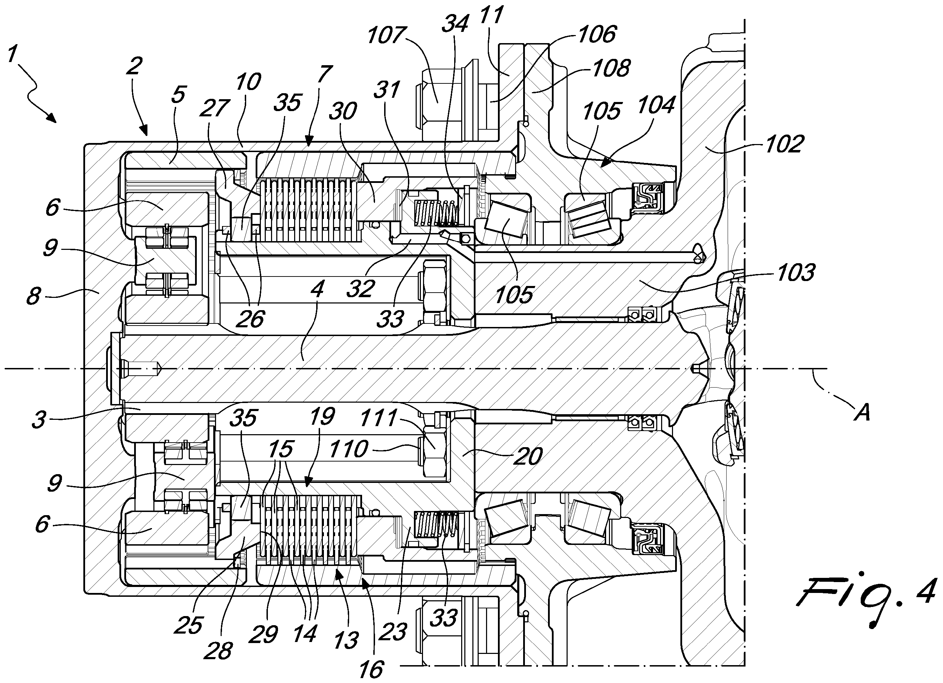

Figure 4 is a schematic cross-sectional view taken along the line IV-IV in Figure 3;
Figure 5 is a schematic cross-sectional view taken along the line V-V in Figure 3;

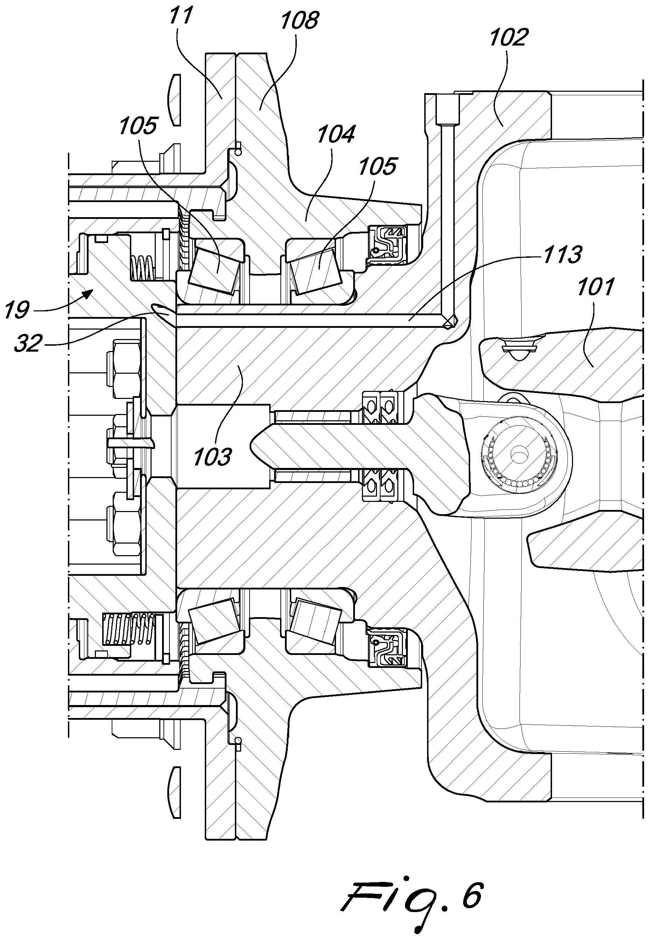

Figure 6 is a schematic cross-sectional view taken along the line VI-VI in Figure 3;
Figure 7 is a view like Figure 5, but with the braking assembly deactivated;

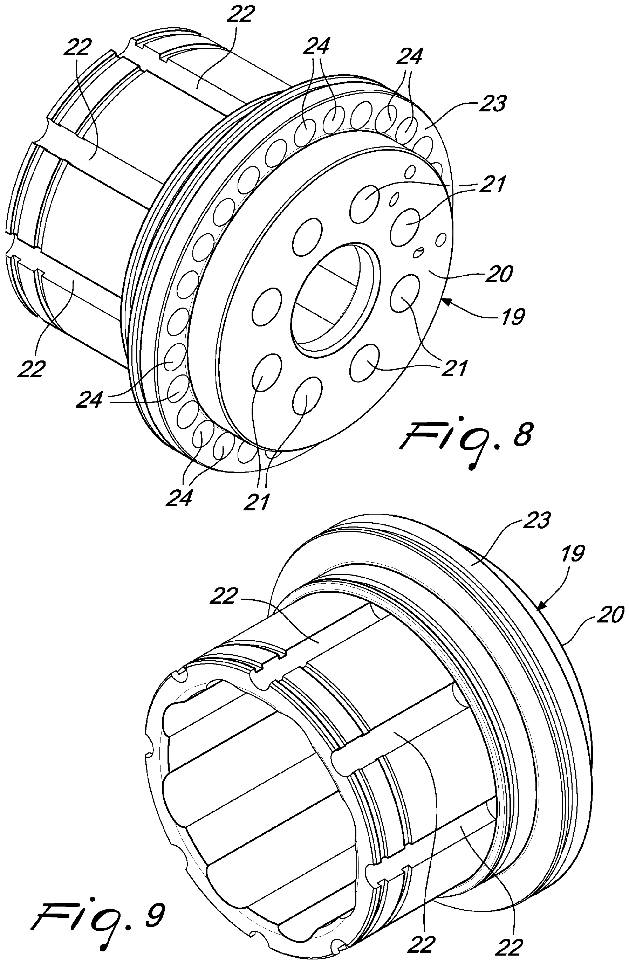

Figures 8 and 9 are respective schematic perspective views of the internal disc holder of the supporting assembly according to the invention;

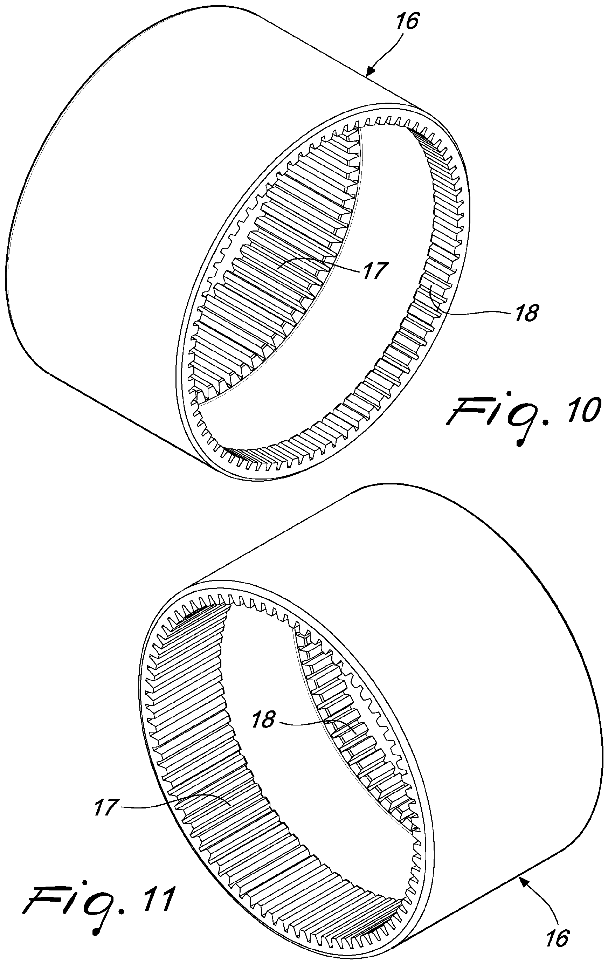

Figures 10 and 11 are respective schematic perspective views of the external disc holder of the braking assembly according to the invention.

With reference to the figures, the reference numeral 1 generally designates a supporting assembly of a wheel with an epicyclic reduction gear system and integrated service brake with simplified assembly.

It should be noted that in the accompanying figures the supporting assembly 1 is shaped like a wheel hub designed to be connected to the axle shaft of a differential axle, but the same inventive concept can also be applied to conventional drive wheels.

The supporting assembly 1 comprises an epicyclic reduction gear unit 2 with at least one reduction stage which comprises a driving sun gear 3 keyed on an input shaft 4 and coupled to a fixed ring gear 5 by the interposition of at least one planet gear 6 which is supported in rotation by a driven planet gear carrier 7. Usually multiple planetary gears 6 are provided (four in the figures), and are distributed symmetrically with respect to the rotation axis A defined by the input shaft 4.

If there is more than one reduction stage, the driving sun gear is part of the first stage and the planet gear carrier described below is part of the last reduction stage.

The planet gear carrier 7 is substantially cup-shaped so as to define a bottom wall 8 from which pivots 9 protrude inwardly for supporting the planetary gears 6 in rotation by the interposition of respective bearings, and a cylindrical side wall 10 which ends with a flange 11 which protrudes radially outward.

In use, the input shaft 4 is coupled to a conventional transmission assembly of the type comprising a transmission shaft 100 which is coaxial to the input shaft 4 and is connected thereto by way of a joint 101 which is accommodated within a hollow frame 102 and is provided with a tubular shank 103, or nosepiece, which is coaxial with the rotation axis A and is arranged adjacent to the supporting assembly 1. Alternatively the input shaft 4 can be directly coupled to the transmission shaft 100. Furthermore the planet gear carrier 7 is connected to the hub 104 of a wheel, not shown, which is supported so that it can rotate about the rotation axis A by the shank 103 by way of interposition of conventional rolling elements 105. In particular the flange 11 is connected to a corresponding counter-flange 108 defined on the peripheral region of the hub 104 by way of a plurality of captive screws 106 and corresponding nuts 107 which are distributed in an annular fashion, and the flange 11 and the counter-flange 108 are provided with respective pairs of holes 12 and 109 which line up for the insertion of a corresponding captive screw 106 or other, equivalent connecting element.

The ring gear 5 is supported in a fixed manner within the planet gear carrier 7 at the planetary gears 6, by being coupled to the frame 102 as will be better explained hereinafter.

The supporting assembly 1 further comprises a braking assembly 13 which is integrated in the epicyclic reduction gear unit 2, and which has a plurality of brake discs 14 which are coupled rotationally to the planet gear carrier 7 and a plurality of complementary brake discs 15 which are supported in a fixed manner within the planet gear carrier and are interposed between the discs 14, the discs 14 and the complementary discs 15 having an annular shape and being arranged symmetrically with respect to the rotation axis A.

According to the invention, a separate external disc holder 16 is accommodated within the side wall 10 and is coupled in rotation with the planet gear carrier 7.

It should be noted that such external disc holder 16 is an additional component of the supporting assembly 1, which is dedicated to the braking assembly 13 and makes it possible to considerably simplify the mounting thereof as will be explained hereinafter.

In the preferred embodiment, such external disc holder 16 is shaped like a bushing with the outer surface substantially matching that of the side wall 10 and the inner surface machined to define respective bands with axial tracks at the opposite ends, of which a first band 17 is for prismatic coupling with corresponding teeth provided on the peripheral region of the discs 14 and a second band 18 is for prismatic coupling with the hub 104, through which the planet gear carrier 7 turns the external disc holder 16.

The possibility is not ruled out however that the planet gear carrier 7 and the external disc holder 16 can be coupled rotationally directly or according to different construction methods.

The hub 104 is provided with a radial shoulder for the axial abutment of the end of the external disc holder 16 at the second band 18.

At the opposite end the external disc holder 16 is coupled axially to the ring gear 5 and is inserted with play inside the side wall 10.

In this manner the planet gear carrier 7 has neither machining on the inner surface of the side wall 10, nor particular contours thereof.

The cross-section of the side wall 10 is, therefore, constant along its axial extension.

The supporting assembly 1 also comprises an internal disc holder 19 shaped like a sleeve, which is supported in a fixed manner and coaxially to the inside of the planet gear carrier 7, and with which the complementary discs 15 are associated. Such internal disc holder 19 is provided, at the end directed toward the frame 102, with a collar 20 that protrudes radially inwardly for connection to the shank 103 by way of a plurality of captive screws 110 and corresponding nuts 111.

For this reason the collar 20 and the shank 103 are provided with respective pairs of holes 21 and 112 which line up for the insertion of a corresponding captive screw 110.

At the opposite end the internal disc holder 19 is provided on the outer surface with axial grooves 22 for prismatic coupling with the complementary discs 15 which in turn are provided with corresponding matching contours along the inner diameter.

The internal disc holder 19 is provided, further, with an annular edge 23 protruding radially outwardly along which dead holes 24 are distributed.

Advantageously, the ring gear 5 is also supported by the internal disc holder 19 by way of interposition of an annular ring gear supporting element 25 which is integral therewith.

In more detail, the annular ring gear supporting element 25 is coupled axially to the internal disc holder 19 by a pair of rings 26 which are inserted in respective annular grooves which are provided on the outer surface of the element, and it is coupled in rotation by axial pins 35 which are accommodated between seats 36 defined on the ring itself and the grooves 22 of the internal disc holder 19.

The annular ring gear supporting element 25 is provided on the peripheral region with a toothing 27 engaged with the ring gear 5, and is coupled axially thereto by a further ring 28.

Furthermore, the annular ring gear supporting element 25 is interposed between the ring gear 5 and the braking assembly 13 and is provided, on the side directed toward such assembly, with a surface 29 for the abutment of the discs 14 and of the complementary discs 15 during braking.

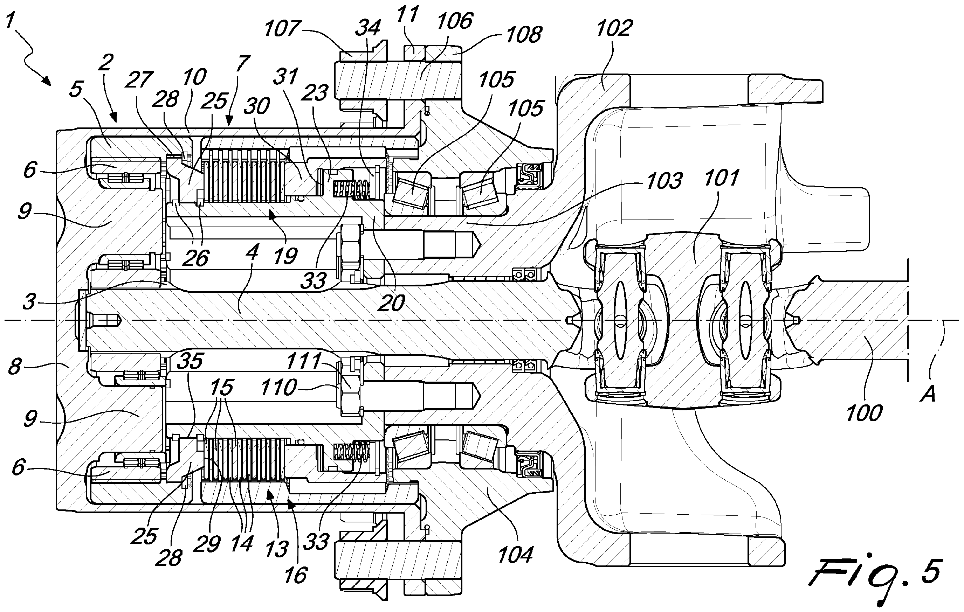

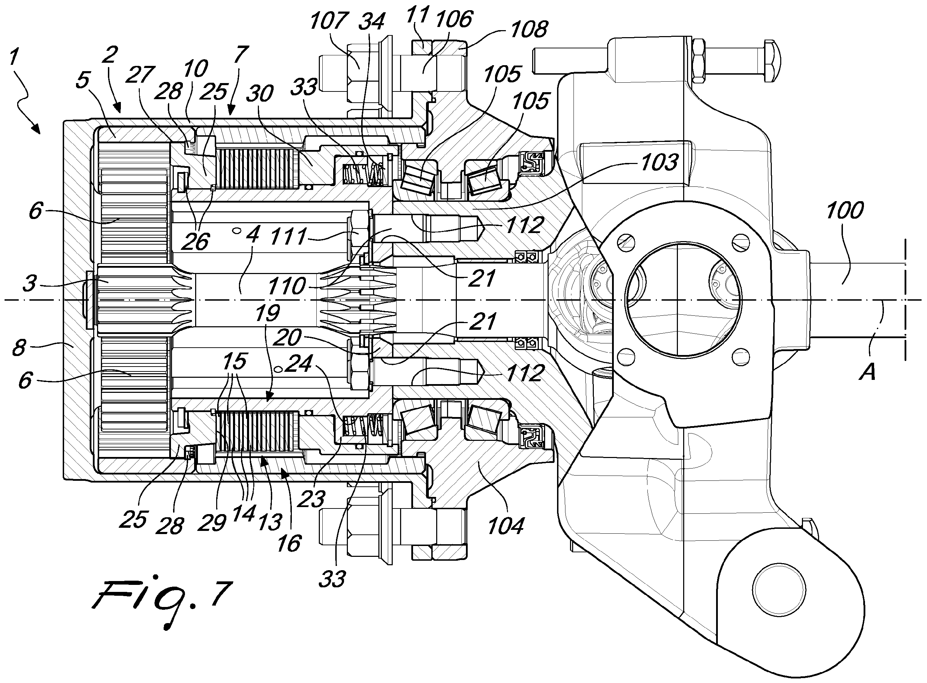

The braking assembly 13 comprises, further, an annular piston 30 which can slide axially between an inactive position with the brake open (Figure 7) and a braking position with the brake closed (Figure 5) in which it keeps the discs 14 and the complementary discs 15 packed against the abutment surface 29. In fact, there is a sealed chamber 31 between the edge 23 and the piston 30, which is fed with oil under pressure by way of a first channel 113 defined on the frame 102 and connected to a second channel 32 defined on the internal disc holder 19 and leading into such chamber, in order to actuate the movement of the piston 30 from the inactive position to the braking position. The return of the piston 30 to the inactive position, in the absence of delivery of oil under pressure, is ensured by elastic return means 33 which are constituted by a plurality of helical compression springs interposed between the edge 23, at the dead holes 24, and an annular plate 34 in integral abutment with the piston 30.

In the assembly step, with the input shaft 4 and the sun gear 3 already connected to the transmission assembly and the hub 104 in position, the operator connects the internal disc holder 19, pre-assembled with the piston 30 and the springs 33, to the shank 103 and, subsequently, positions, in order, the external disc holder 16, the discs 14 and the complementary discs 15, and the ring gear 5 with the annular gear carrier 25.

Lastly the operator proceeds to mount the planet gear carrier 7 with the corresponding planet gears 6 mounted idle on the pivots 9, which must be meshed with the ring gear 5 and the sun gear 3. In this final step of mounting, advantageously, the discs 14 and the complementary discs 15 do not interfere with the positioning of the planet gear carrier 7 and of the corresponding planet gears 6.

Operation of the present invention is the following.

During braking the oil under pressure that enters the chamber 31 actuates the sliding of the piston 30 so as to press the discs 14 and the complementary discs 15 against the abutment surface 29, thus preventing the rotation of the planet gear carrier 7.

The planet gear carrier 7 is rotationally connected to the wheel by way of the captive screws 106 and the nuts 107, or other, equivalent means. The locking of the planet gear carrier 7 thus entails the locking of the wheel, eliminating free rotations and the "clattering" of the machine.

In the absence of the delivery of oil under pressure into the chamber 31, the springs 33 will return the piston 30 to the inactive position, permitting the rotation of the planet gear carrier 7.

In practice it has been found that the invention as described achieves the intended aim and objects and, in particular, attention is drawn to the fact that the supporting assembly according to the invention is provided with a service brake integrated in the epicyclic reduction gear unit, with mounting methods that are considerably simplified with respect to the known art, thus making it possible to reduce the cycle times and the formation of production discards.

The invention, thus conceived, is susceptible of numerous modifications and variations, all of which are within the scope of the appended claims.

Moreover, all the details may be substituted by other, technically equivalent elements.

In practice the materials employed, as well as the contingent dimensions and shapes, may be any according to requirements without thereby departing from the scope of protection claimed herein.

The disclosures in Italian Patent Application No. MO2014A000186 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A supporting assembly (1) of a wheel with an epicyclic reduction gear system and integrated parking brake with simplified assembly, which comprises:
- an epicyclic reduction gear unit (2) with at least one reduction stage provided with a driving sun gear (3) associated with a fixed ring gear (5) by interposition of at least one planet gear (6) which is supported by a driven planet gear carrier (7) and is substantially cup-shaped, so as to define a bottom wall (8) associated with at least one supporting pivot (9) of said at least one planet gear (6) and a cylindrical side wall (10) which can be coupled to the hub (104) of a wheel, the ring gear (5) being supported in a fixed manner within the planet gear carrier (7),
- and a braking assembly (13) provided with a plurality of brake discs (14) which are integral in rotation with said planet gear carrier (7) and a plurality of fixed complementary brake discs (15) interposed between said discs (14),
**characterized in that** it comprises a separate external disc holder (16) which supports said discs (14), is accommodated within said planet gear carrier (7) and is rotationally integral therewith.

2. The supporting assembly (1) according to claim 1, **characterized in that** it comprises first prismatic coupling means (17), which are interposed between said external disc holder (16) and the external peripheral region of said discs (14), the discs (14) having an annular shape.

3. The supporting assembly (1) according to claim 1 or 2, **characterized in that** said external disc holder (16) can be associated to rotate integrally with said hub (104), the planet gear carrier (7) being adapted to turn the external disc holder (16) by interposition of said hub.

4. The supporting assembly (1) according to one or more of the preceding claims, **characterized in that** it comprises an internal disc holder (19) which supports said complementary discs (15), is accommodated within said planet gear carrier (7) and can be associated with the frame (102) of a transmission assembly for the rotational actuation of said sun gear (3).

5. The supporting assembly (1) according to claim 4, **characterized in that** it comprises second prismatic coupling means (22), which are interposed between said internal disc holder (19) and the internal peripheral region of said complementary discs (15), the complementary discs (15) having an annular shape.

6. The supporting assembly (1) according to claim 4 or 5, **characterized in that** said ring gear (5) is supported in a fixed manner by said internal disc holder (19) by way of the interposition of an annular ring gear supporting element (25) which is coupled axially and rotationally to both.

7. The supporting assembly (1) according to claim 6, **characterized in that** said annular ring gear supporting element (25) comprises a surface (29) for the abutment of said discs (14) and complementary discs (15) during braking.

8. The supporting assembly (1) according to one or more of the preceding claims, **characterized in that** the transverse cross-section of the side wall (10) of said planet gear carrier (7) is substantially constant.

9. The supporting assembly (1) according to one or more of the preceding claims, **characterized in that** said braking assembly (13) comprises an annular piston (30) which can slide axially between an inactive position and a braking position in which it keeps said discs (14) and said complementary discs (15) packed, a sealed chamber (31) being provided which is defined between the piston (30) and an edge (23) that protrudes from said internal disc holder (19) in which a pressurized fluid medium is fed in order to actuate the sliding of said piston in the braking position and elastic means (33) for returning to the inactive position.

## Patentansprüche

1. Eine Radaufhängung (1) mit Planetenuntersetzungsgetriebe und integrierter Feststellbremse mit vereinfachtem Aufbau, die Folgendes umfasst:
- eine Planetenuntersetzungsgetriebeeinheit (2) mit mindestens einer Untersetzungsstufe, ausgestattet mit einem Antriebssonnenrad (3), das verbunden ist mit einem festen Tellerrad (5) durch Zwischenschaltung mindestens eines Planetenrades (6), das von einem Träger (7) für das angetriebene Planetenrad getragen und im Wesentlichen becherförmig ist, um eine Bodenwand (8) zu bestimmen, die mit mindestens einem Trägerzapfen (9) des mindestens einen Planetenrades (6) verbunden ist, und eine zylindrische Seitenwand (10), welche mit der Nabe (104) eines Rades gekoppelt werden kann, wobei das Tellerrad (5) fest innerhalb des Planetenradträgers (7) getragen ist,
- und einen Bremsaufbau (13), ausgestattet mit einer Vielzahl von Bremsscheiben (14), die in der Rotation integral mit dem Planetenradträger (7) sind, und einer Vielzahl fester komplementärer Bremsscheiben (15), die zwischen den Scheiben (14) angeordnet sind,
**dadurch gekennzeichnet, dass** sie einen separaten externen Scheibenhalter (16) umfasst, der die Scheiben (14) trägt, innerhalb des Planetenradträgers (7) untergebracht und drehend integral damit ist.

2. Die Radaufhängung (1) gemäß Anspruch 1, **dadurch gekennzeichnet, dass** sie erste prismatische Kopplungsmittel (17) umfasst, die zwischen dem externen Scheibenhalter (16) und dem externen peripheren Bereich der Scheiben (14) angeordnet sind, wobei die Scheiben (14) eine Ringform haben.

3. Die Radaufhängung (1) gemäß Anspruch 1 oder 2, **dadurch gekennzeichnet, dass** der externe Scheibenhalter (16) mit der Nabe (104) verbunden werden kann, um sich integral mit ihr zu drehen, wobei der Planetenradträger (7) ausgebildet ist, um den externen Scheibenhalter (16) durch Zwischenschaltung der Nabe zu drehen.

4. Die Radaufhängung (1) gemäß einem oder mehreren der obigen Ansprüche, **dadurch gekennzeichnet, dass** sie einen internen Scheibenhalter (19) umfasst, der die komplementären Scheiben (15) trägt, innerhalb des Planetenradträgers (7) angeordnet ist und für den Drehantrieb des Sonnenrades (3) mit dem Rahmen (102) eines Übertragungsaufbaus verbunden werden kann.

5. Die Radaufhängung (1) gemäß Anspruch 4, **dadurch gekennzeichnet, dass** sie zweite prismatische Kopplungsmittel (22) umfasst, die zwischen dem internen Scheibenhalter (19) und dem internen peripheren Bereich der komplementären Scheiben (15) angeordnet sind, wobei die komplementären Scheiben (15) eine Ringform haben.

6. Die Radaufhängung (1) gemäß Anspruch 4 oder 5, **dadurch gekennzeichnet, dass** das Tellerrad (5) fest von dem internen Scheibenhalter (19) getragen wird, durch Zwischenschaltung eines ringförmigen Tellerrad-Trägerelements (25), das axial und drehend mit beiden gekoppelt ist.

7. Die Radaufhängung (1) gemäß Anspruch 6, **dadurch gekennzeichnet, dass** das ringförmige Tellerrad-Trägerelement (25) eine Oberfläche (29) als Widerlager für die Scheiben (14) und komplementären Scheiben (15) während des Bremsens umfasst.

8. Die Radaufhängung (1) gemäß einem oder mehreren der obigen Ansprüche, **dadurch gekennzeichnet, dass** der Querschnitt der Seitenwand (10) des Planetenradträgers (7) im Wesentlichen konstant ist.

9. Die Radaufhängung (1) gemäß einem oder mehreren der obigen Ansprüche, **dadurch gekennzeichnet, dass** der Bremsaufbau (13) einen Ringkolben (30) umfasst, der axial zwischen einer inaktiven Position und einer Bremsposition gleiten kann, in welcher er die Scheiben (14) und die komplementären Scheiben (15) eng beieinander hält, wobei eine abgedichtete Kammer (31) bereitgestellt ist, die zwischen dem Kolben (30) und einer Kante (23) bestimmt ist, welche aus dem internen Scheibenhalter (19) herausragt, in die ein unter Druck gesetztes Fluidmedium eingeführt wird, um das Gleiten des Kolbens in die Bremsposition zu aktivieren, und elastische Mittel (33) zum Zurückkehren in die inaktive Position.

## Revendications

1. Ensemble de support (1) d'une roue ayant un système d'engrenage réducteur épicycloïdal et un frein de stationnement intégré présentant un ensemble simplifié, qui comprend :
- une unité d'engrenage réducteur épicycloïdal (2) comprenant au moins un étage de réduction doté d'un planétaire d'entraînement (3) associé à une couronne fixe (5) par l'interposition d'au moins un satellite (6) qui est supporté par un porte-satellite entraîné (7) et est sensiblement cupuliforme, de manière à définir une paroi inférieure (8) associée à au moins un pivot de support (9) dudit au moins un satellite (6) et une paroi latérale cylindrique (10) qui peut être accouplée au moyeu (104) d'une roue, la couronne (5) étant supportée d'une manière fixe à l'intérieur du porte-satellite (7),
- et un ensemble de freinage (13) doté d'une pluralité de disques de frein (14) qui sont d'un seul tenant en rotation avec ledit porte-satellite (7) et d'une pluralité de disques de frein complémentaires fixes (15) interposés entre lesdits disques (14),
**caractérisé en ce qu'**il comprend un porte-disques externe distinct (16) qui supporte lesdits disques (14), est reçu dans ledit porte-satellite (7) et est d'un seul tenant en rotation avec celui-ci.

2. Ensemble de support (1) selon la revendication 1, **caractérisé en ce qu'**il comprend un premier moyen d'accouplement prismatique (17), qui est interposé entre ledit porte-disques externe (16) et la région périphérique externe desdits disques (14), les disques (14) présentant une forme annulaire.

3. Ensemble de support (1) selon la revendication 1 ou 2, **caractérisé en ce que** ledit porte-disques externe (16) peut être associé pour tourner d'un seul tenant avec ledit moyeu (104), le porte-satellite (7) étant adapté pour faire tourner le porte-disques externe (16) par interposition dudit moyeu.

4. Ensemble de support (1) selon l'une ou plusieurs des revendications précédentes, **caractérisé en ce qu'**il comprend un porte-disques interne (19) qui supporte lesdits disques complémentaires (15), est reçu à l'intérieur dudit porte-satellite (7) et peut être associé à la structure (102) d'un ensemble de transmission pour l'actionnement en rotation dudit planétaire (3).

5. Ensemble de support (1) selon la revendication 4, **caractérisé en ce qu'**il comprend un second moyen d'accouplement prismatique (22), qui est interposé entre ledit porte-disques interne (19) et la région périphérique interne desdits disques complémentaires (15), les disques complémentaires (15) présentant une forme annulaire.

6. Ensemble de support (1) selon la revendication 4 ou 5, **caractérisé en ce que** ladite couronne (5) est supportée d'une manière fixe par ledit porte-disques interne (19) au moyen de l'interposition d'un élément de support de couronne annulaire (25) qui est accouplé axialement et en rotation aux deux.

7. Ensemble de support (1) selon la revendication 6, **caractérisé en ce que** ledit élément de support de couronne annulaire (25) comprend une surface (29) pour la butée desdits disques (14) et disques complémentaires (15) pendant le freinage.

8. Ensemble de support (1) selon l'une ou plusieurs des revendications précédentes, **caractérisé en ce que** la section transversale de la paroi latérale (10) dudit porte-satellite (7) est sensiblement constante.

9. Ensemble de support (1) selon l'une ou plusieurs des revendications précédentes, **caractérisé en ce que** ledit ensemble de freinage (13) comprend un piston annulaire (30) qui peut coulisser axialement entre une position inactive et une position de freinage dans laquelle il maintient lesdits disques (14) et lesdits disques complémentaires (15) compressés, une chambre rendue étanche (31) étant fournie qui est définie entre le piston (30) et un bord (23) qui fait saillie à partir du porte-disques interne (19) dans lequel un milieu fluide sous pression est alimenté afin d'actionner le coulissement dudit piston dans la position de freinage et un moyen élastique (33) pour le retour vers la position inactive.
